# FASCICULE DE BREVET EUROPEEN

(11) **EP 0 728 608 B1**
(45) Date de publication et mention de la délivrance du brevet: **24.03.1999**
(21) Numéro de dépôt: 96400405.5
(22) Date de dépôt: 26.02.1996
(51) Int. Cl.: B60J 5/10

(54) **Système de portes articulées pour véhicules, conteneurs et applications analogues**
Gelenktürsystem für Fahrzeuge, Behälter und ähnliche Verwendungen
Articulated door system for vehicles, containers and similar applications

(30) Priorité: 27.02.1995 FR 9502256
(43) Date de publication de la demande: 28.08.1996
(73) Titulaire: POMMIER & CIE, 95310 Saint Ouen L'Aumone (FR)
(72) Inventeur: Froissard, Alain, F-95110 Sannois (FR)
(74) Mandataire: Madeuf, René Louis

(56) Documents cités:
- DE-U- 9 110 532
- FR-A- 1 548 311
- FR-A- 2 614 851

## Description

La présente invention concerne un système de portes articulées utilisable de préférence dans des véhicules poids lourd, ce système pouvant néanmoins être utilisé dans d'autres applications, par exemple dans des conteneurs. Un tel système selon les caractéristiques du préambule de la revendication 1 est connu de FR-A-1 548 311.

La réalisation particulière du système de portes fait qu'il n'occupe aucune place à l'intérieur du volume délimité par les côtés latéraux de la caisse du véhicule, de sorte que le volume de charge est intégralement utilisable. De plus, aucune saillie n'existe dans le volume délimité par la face interne des côté latéraux du véhicule.

Etant donné que le système de portes ne présente aucune saillie vers l'intérieur du véhicule, les parois latérales internes de celui-ci peuvent être parfaitement planes et lisses, ce qui évite toute détérioration lors de la manutention de charges pouvant être manoeuvrées sur des palettes par des chariots élévateurs.

Outre ce qui précède, le système de portes de l'invention permet un pivotement des portes suivant un angle pouvant atteindre 270° de manière que chaque porte puisse être amenée sur le côté latéral externe du véhicule.

Supplémentairement encore, le système de portes de l'invention fait qu'il est facilement démontable de sorte que les portes sont toujours réparables par le changement des seules parties endommagées.

La réalisation de l'invention rend possible que l'ensemble des parties constitutives du sytème de porte soit livré démonté pour être assemblé sur un lieu d'utilisation éloigné du site de production et cela quelles que soient les dimensions des portes à réaliser dont les éléments constitutifs sont réglables sur le lieu d'utilisation par le seul sciage d'éléments de profilés préfabriqués.

En outre, le système de portes est lui-même exempt de toute saillie, les faces interne et externe de chaque porte étant planes. Des joints particuliers assurent de plus une étanchéité à la fermeture tant entre les portes qu'avec la caisse du véhicule.

Conformément à l'invention, le système de portes articulées pour véhicules, conteneurs et applications analogues dans lequel chaque porte est articulée par des gonds ou charnons à la caisse du véhicule est caractérisé en ce que les gonds ou charnons sont supportés par des arbres montés dans des profilés respectivement alignés avec les côtés latéraux de la caisse du véhicule sans faire saillie à l'intérieur de ladite caisse du véhicule.

Diverses autres caractéristiques de l'invention ressortent d'ailleurs de la description détaillée qui suit.

Des formes de réalisation de l'objet de l'invention sont représentées, à titre d'exemples non limitatifs, au dessin annexé.
La fig. 1 est une élévation de face du système de portes articulées selon l'invention.
La fig. 2 est une coupe très agrandie vue suivant la ligne II-II de la fig. 1.
La fig. 3 est une coupe très agrandie illustrant une position caractéristique des organes apparaissant à la fig. 2, une porte étant ouverte.
La fig. 4 est une coupe très agrandie vue suivant la ligne IV-IV des fig. 1 et 5.
La fig. 5 est une perspective d'un raccord mis en oeuvre dans la réalisation du système de portes des figures précédentes.
La fig. 6 est une coupe partielle très agrandie vue suivant la ligne VI-VI de la fig. 1.
La fig. 7 est une élévation partielle très agrandie d'un détail de réalisation.
La fig. 8 est une coupe transversale illustrant la disposition de deux portes en position fermée du système de porte de l'invention.
La fig. 9 est une perspective éclatée illustrant une caractéristique particulière de l'articulation de porte.
La fig. 10 est une coupe.

Le dessin illustre un véhicule poids lourd 1 dont la caisse 2 présente une ouverture arrière 3 délimitée par un plancher 4, un toit 5 et le bord 6 des côtés latéraux 7. Les bords 6, le toit 5 et le plancher 4 sont sensiblement dans un même plan.

Les côtés latéraux 7 sont munis d'un profilé 8 qu'ils portent de manière que ce profilé ne fasse pas saillie.

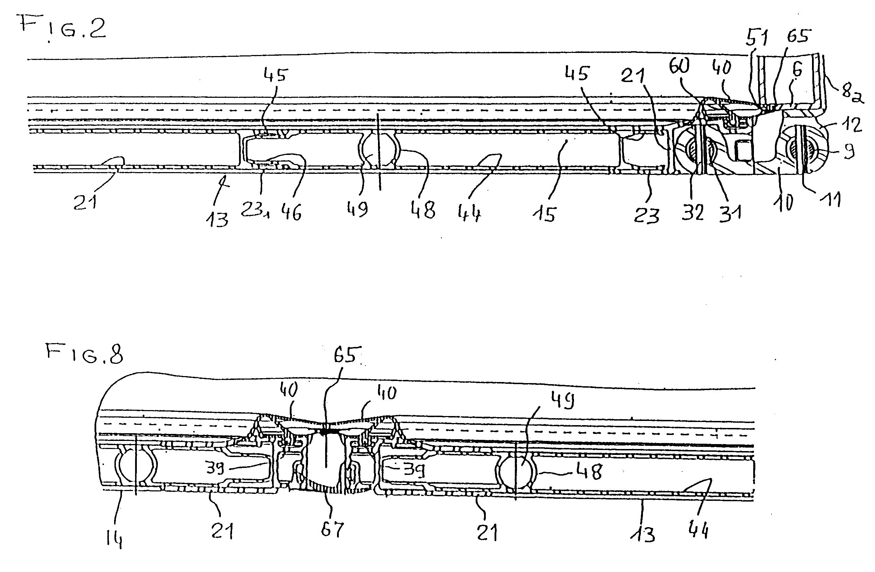

Dans l'exemple représenté par les fig. 2 à 4, chaque profilé 8 est fixé, par exemple riveté ou soudé, à la face externe de chaque côté latéral 7 au moyen d'une patte 8a.

Dans certains véhicules, les côtés latéraux 7 se terminent par un poteau. Dans ce cas, la patte 8a peut être inutile, le profilé 8 est alors seulement fixé à la face extérieure dudit poteau.

Le profilé 8 contient intérieurement un arbre 9 sur lequel sont calés des gonds ou charnons 10 au moyen de goupilles 11 (fig. 2) ou d'autres moyens équivalents.

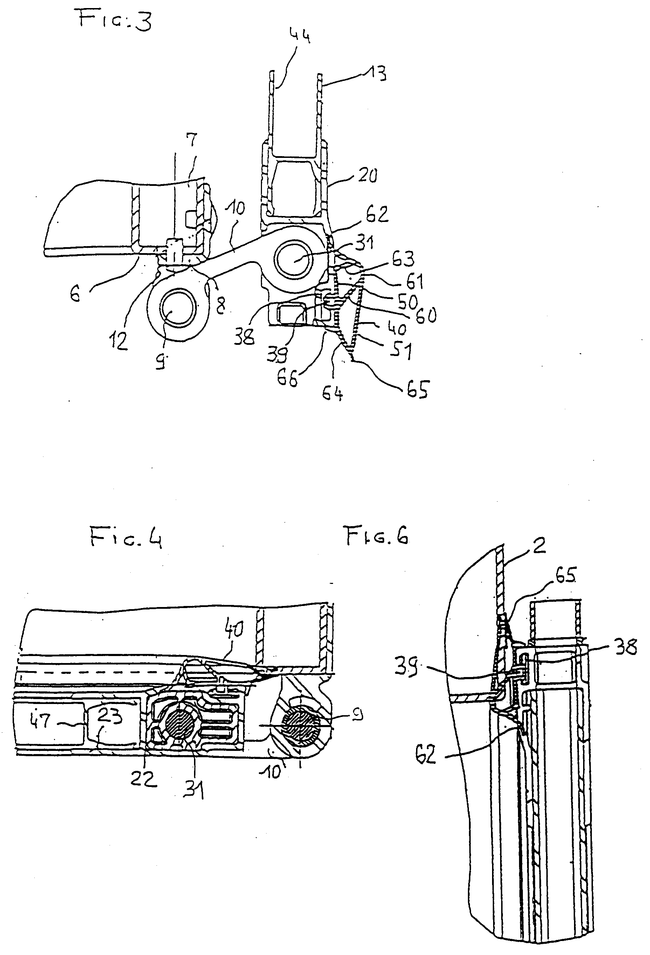

La fig. 2 montre que le profilé 8 présente des encoches 12 au niveau des gonds ou charnons 10 pour permettre leur pivotement vers l'extérieur de la caisse 2 comme le montre la fig. 3.

Les gonds ou charnons 10 sont destinés à l'articulation de portes 13, 14. Chaque porte comprend une âme 15 maintenue dans un cadre 16 qui comporte des traverses supérieure 17, inférieure 18 et des montants latéraux 19, 20.

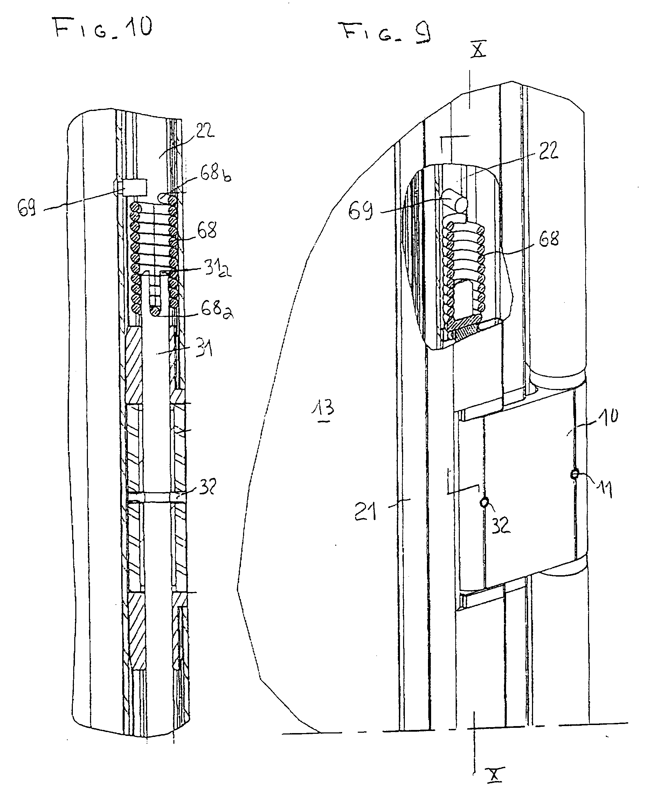

Chaque montant latéral est constitué par un profilé 21 réalisé par un ou plusieurs segments (fig. 2), par exemple en aluminium extrudé qui délimite un canal 22 et une rainure 23 (fig. 4). Le canal 22 est de forme polygonale correspondant à des embouts 27 et 28 d'un raccord 24, et la rainure 23 est prévue pour emboîter le bord de l'âme 15 en réalisant un assemblage à rainure et languette, ce qu'illustre bien les figs. 2 et 4.

Les profilés 21 formant les traverses 17, 18 et le montant 20 de chaque porte sont continus tandis que le profilé 21 formant le montant 19 est constitué, de préférence, par des segments de profilé 21₁, 21₂ ... 21ₙ reliés entre eux par des raccords 24 (fig. 5).

Les raccords 24 sont constitués par des pièces moulées comportant un corps 25 emboîté dans les profilés 21 et prolongé sur un côté par des pattes 26 délimitant une rainure 23a correspondant à la rainure 23 des segments de profilé 21₁, 21₂ ... 21ₙ. Le corps 25 présente également, sur son dessus et son dessous, des embouts 27, 28, de section polygonale, correspondant exactement au canal 22 des profilés. De petites nervures 29 font avantageusement saillie des parois latérales des embouts 27, 28 pour être engagées à force, ainsi que l'illustrent la fig. 5, dans le canal 22 des segments de profilé 21₁ ... 21ₙ. Les nervures 29 constituent des éléments de friction.

Le corps 25 de chaque raccord présente un évidement 30 bien visible à la fig. 5 pour contenir les gonds ou charnons 10 dont l'extrémité libre est calée sur un arbre 31 parallèle à l'arbre 9 et traversé par des goupilles 32 (fig. 2).

L'arbre 31 s'étend à travers le canal 22 et passe dans des alésages 33, 34 des embouts 27, 28 (fig. 5).

Les profilés 21 constitutifs des montants latéraux de même que les raccords 24 présentent des rainures 38 pour la mise en place de pions 39 assurant le maintien de joints déformables 40 destinés à prendre appui notamment contre les bords 6 des côtés latéraux de la caisse 2 ainsi que contre le bord du plancher 4 et du toit 5. Les profilés 21 sont décrits plus en détail dans ce qui suit.

Les profilés constitutifs des joints déformables 40 pour les traverses supérieure et inférieure 17, 18 et pour les montants latéraux 19, 20 sont réunis par des pièces d'angle 41 (fig. 7). Les pièces d'angle sont avantageusement fabriquées par moulage pour que leur aspect extérieur corresponde à celui des joints déformables. Chaque pièce d'angle présente à son extrémité un embout de raccordement 42 engagé dans le profilé du joint correspondant auquel il est collé. Cette réalisation permet d'éviter le risque que présente une coupe d'onglet dont la jonction peut se rompre.

La fig. 2 illustre une réalisation avantageuse de l'âme 15 des portes. Suivant cette figure, l'âme est réalisée à partir de profilés extrudés 44 présentant à une extrémité des pattes 45 engagées à force dans la rainure 23 des montants latéraux 19, 20 et à l'autre extrémité une partie rétreinte 46 formant une fausse languette destinée à être engagée dans une rainure 23₁ délimitée par les pattes 45 d'un profilé suivant de même forme.

Chaque profilé extrudé 44 comporte avantageusement au moins une cloison de renfort 47 et une cloison tubulaire 48 délimitant un alésage 49.

Ce qui précède montre que l'assemblage de plusieurs profilés extrudés 44 permet de réaliser une âme 15 d'une largeur quelconque correspondant à celle des panneaux de porte à obtenir.

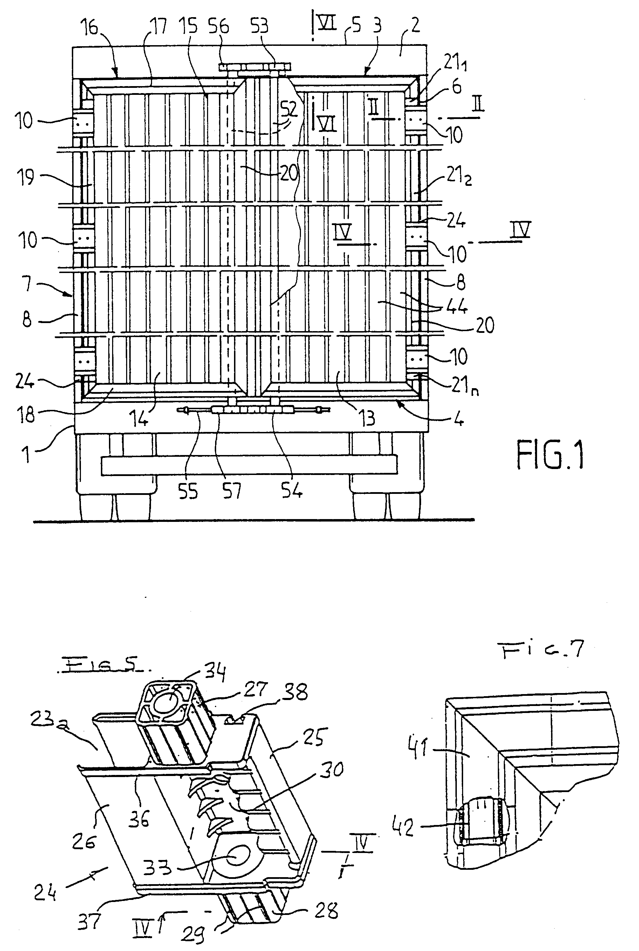

L'alésage 49 de la cloison tubulaire 48 d'au moins un profilé extrudé 44 de chaque porte est mis à profit pour le montage de barres 52 reliant des pênes 53, 54 manoeuvrables à partir de leviers de commande 55 (fig. 1) disposés de préférence en dessous des portes pour permettre le verrouillage, respectivement le déverrouillage des pênes 53, 54 dans des gâches 56, 57.

La description qui précède illustre à la fig. 1 les portes en position de fermeture. Pour ouvrir les portes, les leviers 55 sont actionnés, ce qui provoque la rotation des pênes 53, 54 reliés par les barres 52. Après déverrouillage des pênes, chaque porte peut être pivotée, les gonds ou charnons 10 entraînant en rotation l'arbre 9 suivant un angle pouvant dépasser 180° et atteindre 270° de manière que lesdites portes viennent occuper une position pour laquelle elles s'étendent parallèlement aux côtés latéraux 7 de la caisse 2 ce qui est illustré par la fig. 3.

Etant donné que chaque arbre 9 est disposé à l'intérieur du profilé 8 en U, les gonds ou charnons 10 ne font pas saillie dans l'espace laissé libre par les portes, de sorte que toute la largeur intérieure de la caisse est disponible et que des marchandises, chargées ou déchargées au moyen d'élévateurs et de palettes, ne risquent pas heurter des parties saillantes de l'espace interne de la caisse 2 ni des parties des portes. Cela ressort clairement de l'illustration suivant la fig. 3.

Les portes décrites dans ce qui précède n'étant en aucun point encastrées dans des parties de la caisse 2 du véhicule mais affleurant seulement les montants, le plancher et le toit, il était important de prévoir des joints 40 pouvant assurer une élasticité parfaite en toutes circonstances.

La fig. 3 illustre en coupe le joint mis en place mais ne subissant aucune contrainte de serrage puisque la porte est en position ouverte. La forme générale en section du joint est approximativement celle d'un trapèze dont la petite base 50 est munie des pions 39 qui en font saillie. La petite base 50 et la grande base 51 sont reliées par une cloison oblique 60 s'étendant intérieurement depuis la petite base, au voisinage du niveau du pion 39 vers la partie la plus saillante et arrondie 61 de la grande base 51.

La grande base est prolongée par une lèvre souple 62 renforcée à sa base par le petit côté 63 du trapèze.

A l'opposé, l'autre petit côté 64 du trapèze est incliné et est prolongé, d'une part, au moyen d'une lèvre souple 65 de faible longueur et, d'autre part, au moyen d'un talon d'emboîtement 66 prenant appui contre la face externe du montant 20 correspondant ou d'une traverse selon le cas.

Le joint décrit ci-dessus est réalisé par extrusion d'une matière souple et élastique, par exemple en élastomère.

La configuration particulière décrite permet une liaison étanche en toutes circonstances ce qui est illustré aux différentes figures qui montrent en trait plein les parties déformées et en trait hachuré les parties non déformées. Les fig. 2 et 4 montrent qu'une partie de la grande base 51 est déformée dans le sens pour lequel il en résulte un pivotement de la lèvre 65 appliquée contre le bord 6. La cloison 60 agit à la façon d'une entretoise interne en empêchant le basculement de la lèvre 65 vers l'extérieur du bord 6.

Dans tous les cas, le joint 40 est décalé vers l'intérieur de la porte pour travailler de la manière expliquée ci-dessus et réduire l'étendue de la partie pouvant être mouillée par la pluie.

La pression exercée sur le joint 40 lorsque la porte est fermée maintient, en outre, la lèvre souple 62 toujours en appui et la déformation subie fait croître la pression exercée par ailleurs par la lèvre souple 65.

La fig. 8 montre que chaque battant de porte est muni sur les bords se faisant face de joints 40 qui portent l'un sur l'autre à partir du côté intérieur des portes. En outre, un joint de couverture 67 est porté par la porte 13 et présente une partie déformable en appui contre la porte 14.

Outre ce qui précède, les fig. 9 et 10 montrent des ressorts de torsion 68 qui sont insérés dans chaque canal 22 de façon qu'un brin d'extrémité 68a soit engagé dans une fente 31a de chaque arbre 31 solidaire des gonds ou charnons 10 par les goupilles 32. L'autre brin d'extrémité 68b des ressorts 68 est en appui à l'intérieur du profilé formant le canal 22.

Le ressort agissant sur le gond ou charnon a pour fonction d'assurer une priorité d'ouverture sur l'ensemble de la charnière à savoir que les gonds ou charnons 10 restent dans le plan de la porte jusqu'à une ouverture d'environ 180° de celle-ci à partir de laquelle le charnon vient en butée sur le support. La rotation est ensuite possible jusqu'à 270° en sollicitant le ressort. Ceci permet un déploiement est un décollement du joint 40 dans de bonnes conditions sans arrachement par friction d'une partie de celui-ci. Une butée 69 empêche l'échappement du ressort.

L'invention n'est pas limitée aux exemples de réalisation représentés et décrits en détail car diverses modifications peuvent y être apportées sans sortir du cadre défini par les revendications.

## Revendications

1. Système de portes articulées pour véhicules, conteneurs et applications analogues, dans lequel chaque porte (13, 14) est articulée par des gonds ou charnons (10) à la caisse (2) du véhicule et est munie intérieurement d'un joint déformable périphérique (40), caractérisé en ce que les gonds ou charnons (10) sont supportés par des arbres (9, 31) montés dans des profilés (8) respectivement alignés avec les côtés latéraux (7) de la caisse (2) du véhicule sans faire saillie à l'intérieur de ladite caisse (2) du véhicule.

2. Système de portes articulées suivant la revendication 1, caractérisé en ce que les gonds ou charnons (10) sont reliés à chaque porte (13, 14) par un arbre (31) sur lequel ils sont calés par des goupilles (32), ledit arbre étant logé à l'intérieur d'un profilé (21) formant un montant latéral de ladite porte (13, 14), ledit profilé (21) contenant les gonds ou charnons (10) étant constitué par des segments de profilé (21₁, 21₂ ... 21ₙ) reliés par des raccords (24) présentant des embouts (27, 28) engagés dans les segments de profilé (21₁, 21₂ ... 21ₙ) qui délimitent un canal (22) pour lesdits embouts.

3. Système de portes articulées suivant l'une des revendications 1 et 2, caractérisé en ce que les raccords (24) sont réalisés en matière moulée et délimitent chacun un évidement (30) pour chaque gond ou charnon.

4. Système de portes articulées suivant l'une des revendications 1 à 3, caractérisé en ce que les profilés (21) et les segments de profilé (21₁, 21₂ ... 21ₙ) constitutifs des montants latéraux (19, 20) de chaque porte présentent de même que les raccords (24) des pattes délimitant une rainure (23, 23a) pour l'emboîtement d'une âme (15) également emboîtée dans une rainure (23) de profilés formant des traverses supérieure et inférieure (17, 18).

5. Système de portes articulées suivant l'une des revendications 1 à 4, caractérisé par des pièces d'angle moulées (41) munies d'embouts (42) pour relier les joints déformables (40) par emboîtement et collage.

6. Système de portes articulées suivant l'une des revendications 1 à 5, caractérisé en ce que les profilés formant les traverses supérieure et inférieure (17, 18) ainsi que les montants latéraux (19, 20) présentent des rainures (38) pour l'introduction de pions (39) de fixation de joints déformables (40) présentant une section sensiblement en trapèze dont la petite base (50) comporte les pions (39), la petite base (50) et la grande base (51) étant reliées par une cloison oblique (60) allant sensiblement des pions (39) vers la partie la plus saillante de la grande base (51).

7. Système de portes articulées suivant la revendication 6, caractérisé en ce que la grande base du joint (40) est prolongée par une lèvre souple (62) renforcée à sa base par le petit côté (63) du trapèze et en ce que l'autre petit côté du trapèze est incliné et prolongé par une lèvre souple (65) et au moyen d'un talon d'emboîtement (66) pour prendre appui contre la face externe d'un montant (20) respectivement d'une traverse (17, 18).

8. Système de portes articulées suivant l'une des revendications 1 à 7, caractérisé en ce que l'âme (15) de chaque porte est réalisée par emboîtement de profilés extrudés (44) présentant sur un côté des pattes (45) délimitant une rainure (23₁) et de l'autre côté une partie rétreinte (46) délimitant une fausse languette emboîtée dans la rainure (23₁) du profilé suivant.

9. Système de portes articulées suivant l'une des revendications 1 à 8, caractérisé en ce que les profilés extrudés constitutifs de l'âme (15) de chaque porte délimitent intérieurement au moins une cloison tubulaire (48) pour le logement de barres (52) supportant des pênes (53, 54) respectivement disposés en dessous et au-dessus de la porte pour coopérer avec des gâches (56, 57).

10. Système de portes articulées suivant l'une des revendications 1 à 9, caractérisé en ce que les arbres (31) reliés aux gonds ou charnons (10) par les goupilles (32) sont reliés à une extrémité de ressort (68) dont l'autre extrémité est en butée dans le profilé (21) afin d'assurer une priorité d'ouverture faisant que chaque gond ou charnon reste dans le plan de la porte jusqu'à une ouverture de 180° de la porte, l'ouverture jusqu'à 270° se faisant par sollicitation du ressort.

## Claims

1. Articulated door system for vehicules, containers and similar applications, in which each door (13, 14) is articulated by a set of hinge pins or knuckles (10) to the body (2) of the vehicule and is internally provided with a peripheral distortable gasket (40), characterized in that the hinge pins or knuckles (10) are supported by shafts (9, 31) that are mounted in structural members (8) respectively aligned with the lateral sides (7) of the body (2) of the vehicule without protruding inside said body (2) of the vehicule.

2. Articulated door system according to claim 1, characterized in that the hinge pins or knuckles (10) are connected to each door (13, 14) by a shaft (31) on which they are keyed by means of bolts (32), said shaft being housed inside a structural member (21) which forms a lateral upright for said door (13, 14), said structural member (21), that contains the hinge pins or knuckles (10), being formed by structural member segments (21₁, 21₂ ... 21ₙ) connected by couplers (24) provided with nipples (27, 28) engaged in the structural member segments (21₁, 21₂ ... 21ₙ) which define a channel (22) for said nipples.

3. Articulated door system according to one of claim 1 and 2, characterized in that the couplers (24) are made of a moulded material, each defining a recess (30) for each hinge pin of knuckle.

4. Articulated door system according to one of claim 1 and 3, characterized in that the structural members (21) and the structural member segments (21₁, 21₂ ... 21ₙ), constituting the lateral uprights (19) of each door, are provided, samely as the couplers (24), with tabs that define a groove (23, 23a) for encasing a web (15) that is also encased in a groove (23) of structural members that form upper and lower cross-members (17, 18).

5. Articulated door system according to one of claim 1 to 4, characterized by moulded angle parts (41) provided with nipples (42) for connecting the distortable gaskets (40) by insertion and gluing.

6. Articulated door system according to one of claim 1 to 5, characterized in that the structural members that form the upper and lower cross-members (17, 18) as well as the lateral uprights (19, 20) are provided with grooves (38) for insertion of studs (39) for fixing distortable gaskets (40) having a substantially trapezium shaped section the smaller base (50) of which comprises the studs (39), the smaller base (50) and the greater base (51) being connected by means of an oblique partition (60) that runs substantially from the studs (39) to the most protruding part of the greater base (51).

7. Articulated door system according to claim 6, characterized in that the greater base of the gasket (40) is extended by a flexible lip (62) that is reinforced at the base thereof by the smaller side (63) of the trapezium, and in that the other smaller side of the trapezium is inclined and extended by a flexible lip (65) and by means of an insertion heel (66) for bearing on the outer face of an upright (20) respectively a cross-member (17, 18).

8. Articulated door system according to one of claim 1 to 7, characterized in that the web (15) of each door is made by encasing extruded structural members (44) provided, on one side, with tabs (45) that define a groove (23₁) and, on the other side, with a restricted part (46) that defines a false tongue encased in the groove (23₁) of the next structural member.

9. Articulated door system according to one of claim 1 to 8, characterized in that the extruded structural members, constituting the web (15) of each door, internally define at least one tubular partition (48) for the housing of bars (52) that support a set of latches (53, 54) respectively arranged under and above the door for cooperating with a set of keepers (56, 57).

10. Articulated door system according to one of claim 1 to 9, characterized in that the shafts (31) connected to the hinge pins or knuckles (10) by means of the bolts (32) are connected to one end of springs (68) the other end of which is in abutment in the structural member (21) in order to provide an opening priority making that each hinge pin or knuckle remains in the plane of the door up to an opening by 180° of the door, the opening up to 270° being made by a biasing of the spring.

## Patentansprüche

1. System von angelenkten Türen für Fahrzeuge, Transportbehälter und ähnliche Anwendungen, bei welchem jede Tür (13, 14) durch Angeln oder Scharnieraugen (10) an dem Kasten (2) des Fahrzeuges angelenkt ist und innen mit einer verformbaren Umfangsdichtung (40) versehen ist, dadurch gekennzeichnet, dass die Angeln oder Scharnieraugen (10) durch Wellen (9, 31) getragen werden, die in jeweils mit den seitlichen Seiten (7) des Kastens (2) des Fahrzeuges fluchtend ausgerichteten Profilen (8) angeordnet sind, ohne aus dem Inneren des besagten Kastens (2) hervorzuragen.

2. System von angelenkten Türen gemäss Anspruch 1, dadurch gekennzeichnet, dass die Angeln oder Scharnieraugen (10) mit jeder Tür (13, 14) durch eine Welle (31), an welcher sie durch Haltestücke (32) festgesetzt sind, verbunden sind, wobei die besagte Welle innerhalb eines einen Seitenpfosten der besagten Tür (13, 14) bildenden Profils (21) untergebracht ist, wobei das die Angeln oder Scharnieraugen (10) enthaltende besagte Profil (21) durch durch Verbindungsstücke (24) verbundene Profilsegmente (21₁, 21_{2...}21ₙ) gebildet wird, welche Verbindungsstücke in die Profilsegmente (21₁, 21₂, ...21ₙ) eingesteckte Ansatzstücke (27, 28) aufweisen, welche Profilsegmente einen Kanal (22) für die besagten Ansatzstücke abgrenzen.

3. System von angelenkten Türen gemäss einem der Ansprüche 1 und 2, dadurch gekennzeichnet, dass die Verbindungsstücke (24) aus geformtem Werkstoff hergestellt werden, und jeweils eine Aussparung (30) für jede Angel bzw. jedes Scharnierauge abgrenzen.

4. System von angelenkten Türen gemäss einem der Ansprüche 1 bis 3, dadurch gekennzeichnet, dass die die Seitenpfosten (19, 20) jeder Tür bildenden Profile (21) und Profilsegmente (21₁, 21₂...21ₙ) sowie die Verbindungsstücke (24) eine Nut (23, 23a) zum Einstecken einer Seele (15) abgrenzende Ansatzlappen aufweisen, welche Seele ebenfalls in einer Nut (23) von eine obere und eine untere Querstrebe (17, 18) bildenden Profilen eingesteckt ist.

5. System von angelenkten Türen gemäss einem der Ansprüche 1 bis 4, gekennzeichnet durch mit Ansatzstücken (42) versehene geformte Eckwinkelstücke (41), um die verformbaren Dichtungen (40) durch Einstecken und Verkleben zu verbinden.

6. System von angelenkten Türen gemäss einem der Ansprüche 1 bis 5, dadurch gekennzeichnet, dass die die obere und untere Querstrebe (17, 18) sowie die Seitenpfosten (19, 20) bildenden Profile Nuten (38) zur Einführung von Stiften (39) zur Befestigung von verformbaren Dichtungen (40) aufweisen, welche Dichtungen einen etwa trapezförmigen Querschnitt aufweisen, dessen kleine Basis (50) die Stifte (39) aufweist, wobei die kleine Basis (50) und die grosse Basis (51) durch eine etwa von den Stiften (39) ab zu dem vorspringendsten Teil hin der grossen Basis (51) verlaufende schräge Trennwand (60) verbunden sind.

7. System von angelenkten Türen gemäss Anspruch 6, dadurch gekennzeichnet, dass die grosse Basis der Dichtung (40) durch eine an ihrer Basis durch den kleinen Schenkel (61) des Trapezes verstärkte nachgiebige Lippe (62) fortgesetzt wird, und dass der andere kleine Schenkel des Trapezes geneigt und durch eine nachgiebige Lippe (65) und mittels einer Einstecknase (66), um sich an der Aussenfläche eines Pfostens (20) jeweils einer Querstrebe (17, 18) abzustützen, fortgesetzt wird.

8. System von angelenkten Türen gemäss einem der Ansprüche 1 bis 7, dadurch gekennzeichnet, dass die Seele (15) jeder Tür durch Ineinanderstecken von extrudierten Profilen (44) hergestellt wird, die auf einer Seite eine Nut (23₁) abgrenzende Ansatzlappen (45) und auf der anderen Seite einen eine in der Nut (23₁) des nachfolgenden Profils eingesteckte falsche Zunge abgrenzenden verengten Teil (46) aufweisen.

9. System von angelenkten Türen gemäss einem der Ansprüche 1 bis 8, dadurch gekennzeichnet, dass die die Seele (15) jeder Tür bildenden extrudierten Profile im Inneren wenigstens eine rohrförmige Trennwand (48) zur Aufnahme von jeweils oberhalb und unterhalb der Tür angeordneten Riegelrasten (53, 54) tragenden Stangen (52) abgrenzen, zur Zusammenwirkung mit Schlossplatten (56, 57).

10. System von angelenkten Türen gemäss einem der Ansprüche 1 bis 9, dadurch gekennzeichnet, dass die mit den Angeln bzw. Scharnieraugen (10) durch Haltestifte (32) verbundenen Wellen (31) mit einem Ende einer Feder (68) verbunden sind, dessen andere Ende sich im Anschlag an das Profil (21) befindet, um einen Öffnungsvorrang zu gewährleisten, was ausmacht, dass jede Angel bzw. Scharnieröse in der Ebene der Tür bis zu einer Öffnung von 180° der Tür verbleibt, wobei die Öffnung bis 270° durch Beaufschlagung der Feder stattfindet.
